# EUROPÄISCHE PATENTSCHRIFT

(11) **EP 2 095 707 B1**
(45) Veröffentlichungstag und Bekanntmachung des Hinweises auf die Patenterteilung: **20.02.2013**
(21) Anmeldenummer: 08003645.2
(22) Anmeldetag: 28.02.2008
(51) Int. Cl.: A01G 23/06

(54) **Fräskopf zum Fräsen von Baumstümpfen**
Cutting head for cutting tree stumps
Tête de fraisage destinée à fraiser des souches d'arbres

(43) Veröffentlichungstag der Anmeldung: 02.09.2009
(73) Patentinhaber: LASCO Heutechnik GmbH, 5221 Lochen (AT)
(72) Erfinder: Landrichinger, Johann, 5221 Lochen (AT)
(74) Vertreter: Heyerhoff Geiger & Partner Patentanwälte

(56) Entgegenhaltungen:
- WO-A-2006/033616
- DE-A1- 10 020 388
- DE-A1- 10 137 055
- US-A- 1 164 659
- US-A- 4 697 625
- US-A- 4 757 848
- US-A1- 2007 009 340

## Beschreibung

Die Erfindung betrifft einen Fräskopf zum Fräsen von Baumstümpfen mit einer Fräseinheit und einem daran befestigten Verbinder mit einer von der Fräseinheit abgewandten Öffnung, deren Innenwand mit einem Innengewinde zum Aufschrauben auf ein maschinelles Antriebsmittel zum Antrieb der Fräseinheit versehen ist.

Beim Fällen von Bäumen verbleiben Baumstümpfe im Boden, die oftmals beseitigt werden sollen. Ein Ausreißen ist in der Regel nicht möglich, da die Baumstümpfe zu fest im Boden verwurzelt sind. Zum Beseitigen von Baumstümpfen ist es bekannt, die Baumstümpfe abzufräsen. Hierzu wird eine Fräsmaschine von oben auf den Baumstumpf gesetzt und der Baumstumpf wird so weit nach unten abgefräst, bis er nicht mehr stört. Die Fräsmaschine weist einen Fräskopf an einem Tragarm und einen maschinellen Antrieb auf zum rotatorischen Antrieb des Fräskopfs, so dass der Fräskopf auf den Baumstumpf abgesenkt und zum Fräsen angetrieben werden kann. Hierbei wird der Fräskopf durch den Tragarm nach unten gedrückt und somit mit dem Fräseprozess in den Baumstumpf eingeführt. Ein solcher Fräskopf ist beispielsweise aus der Patentschrift US 4,757,848 bekannt.

Es ist eine Aufgabe der Erfindung, einen Fräskopf anzugeben, mit dem ein Baumstumpf mit geringem Aufwand gefräst werden kann.

Diese Aufgabe wird durch einen Fräskopf der eingangs genannten Art gelöst, bei dem die Innenwand erfindungsgemäß zumindest im Gewinde tragenden Abschnitt konisch ist und in die Öffnung (20) ein Spaltkegel (8) eines Holzspalters eingeschraubt ist.

Die Erfindung geht hierbei von der Überlegung aus, dass der Fräskopf vorteilhafterweise lösbar an einem ihn tragenden Antriebsmittel befestigt ist, z.B. an einem Tragarm mit einem Rotationsmittel. Zur Befestigung kann eine Gewindeverbindung gewählt werden, bei der der Fräskopf auf das Antriebsmittel aufgeschraubt ist oder umgekehrt.

Um eine große Fräsfläche zu erreichen, ist die Fräseinheit zweckmäßigerweise groß ausgeführt, z.B. mit einem Durchmesser der Fräsfläche von über 50 cm. Bei einer solchen Fläche treten hohe Kräfte am Verbinder auf, so dass der Verbinder sehr fest mit dem Antriebsmittel verschraubt wird. Außerdem kommt der Fräskopf bei Waldarbeiten in unmittelbaren Kontakt mit dem Waldboden, so dass er einer hohen Verschmutzung unterworfen ist, durch die die Gewindeverbindung verschmutzen kann. Eine fest angezogene und verschmutzte Gewindeverbindung ist schwer zu lösen.

Ein Lösen einer Gewindeverbindung kann erleichtert werden, wenn die beiden ineinander greifenden Gewinde sich bei einem lösenden Verdrehen gegeneinander ein Stück weit voneinander lösen, das Außengewinde sich also - bildlich gesprochen - ein Stück weit zusammenzieht und sich so vom Innengewinde trennt. Dies kann durch eine konische Gewindeverbindung erreicht werden. Bei einem Herausschrauben des kegelförmigen Außengewindes des Antriebsmittels aus dem konischen Innengewinde wird der Durchmesser des Kegels an einer relativ zum Innengewinde fixierten Stelle kleiner, so dass sich der Kegel vom Innengewinde löst und leicht herausschrauben lässt. Der Fräskopf kann auch bei einer hohen Verschmutzung leicht von einem ihn tragenden Antriebsmittel gelöst werden.

Die Fräseinheit umfasst Fräselemente zum Schaben bzw. Eingraben in Holz. Der Verbinder kann in Form einer Hülse ausgeführt sein, in die von der einen Seite das Antriebsmittel und von der anderen Seite die Fräseinheit eingeführt ist. Das Innengewinde ist zweckmäßigerweise ein Sägezahngewinde.

Mit einer kleinen Schraubbewegung kann eine große Ausführbewegung des Antriebsmittels aus der Öffnung und damit ein leichtes Lösen der Gewindeverbindung erreicht werden, wenn das Innengewinde mehrgängig ist.

Außerdem wird vorgeschlagen, dass die Öffnung durchgängig in einer Fräsrichtung durch den Verbinder reicht. Es kann ein Kegel mit einem Außengewinde eingeschraubt werden, ohne dessen Gewindespitze zu nutzen. Eine Gewindespitze ist - insbesondere in einem Forstbetrieb - einem hohen Verschleiß unterworfen, so dass sie ggf. ungeeignet zum Einschrauben in das Innengewinde ist. Durch die in Fräsrichtung bzw. Axialrichtung durchgehende Öffnung kann die Gewindespitze uneingeschraubt in der Öffnung verbleiben und stört einen Montage- oder Demontageprozess nicht.

Vorteilhafterweise lässt das Innengewinde einen Kegelspitzenbereich eines in das Innengewinde eingeschraubten Außengewindekegels frei, wobei eine axial Länge des Kegelspitzenbereichs mindestens 50% der axialen Länge des Innengewindes beträgt. Beträgt beispielsweise die axiale Länge des Innengewindes 15 cm, so bleibt der Kegelspitzenbereich bei eingeschraubtem Antriebsmittel mit einer axialen Länge von zumindest 7,5 cm unberührt vom Innengewinde. Die axiale Länge ist die Länge in Axialrichtung.

In einer vorteilhaften Weiterbildung der Erfinder weist der Verbinder eine radiale, von außen zugängliche Ausnehmung zum Einstecken eines Lösewerkzeugs auf. Der Fräskopf kann mit dem Hebel eines eingesteckten Lösewerkzeugs mit großer Kraft vom Antriebsmittel abgeschraubt werden. Die Ausnehmung ist zweckmäßigerweise verbunden mit der Öffnung für das Antriebsmittel oder eine Fräseinheit, so dass das Lösewerkzeug bis in die Öffnung geführt werden kann und dort sicher gehalten ist.

Das Fräsen von Baumstümpfen geschieht in der Regel von oben senkrecht nach unten und es entsteht eine große Menge Späne. Diese bleiben im Bereich des Fräskopfs liegen und füllen so den Raum, in dem der Fräskopf dreht. Nach einer Weile ist der Fräskopf in die Späne eingegraben, so dass ein Bediener den Arbeitsfortschritt nicht mehr richtig erkennen kann. Es ist daher vorteilhaft, wenn der Fräskopf ein Mittel zum Abtransport der Frässpäne aus dem Arbeitsbereich des Fräskopfs hat. Der Fräskopf bleibt weitgehend frei von Spänen und kann fortwährend überwacht werden.

Ein Abtransport von Spänen kann erleichtert werden, wenn die Fräseinheit mehrere radial ausgerichtete Fräsarme mit in Axialrichtung freien Spanauswurfausnehmungen zwischen ihnen aufweist. Die Späne können zwischen den Fräsarmen nach oben, also entgegen der Fräsrichtung, und gleichzeitig oder in einem weiteren Transportschritt nach radial außen geworfen und so aus dem Arbeitsbereich entfernt werden. Die Fräsarme sind zweckmäßigerweise jeweils mit mehreren Fräselementen bestückt, die in Radialrichtung zweckmäßigerweise nebeneinander angeordnet sind. Die Radialrichtung ist auf die Anordnung der Fräselemente bezogen und gilt in diesem Zusammenhang auch bei einer Abweichung von der streng radialen Richtung um ± 10° gewahrt.

Zweckmäßigerweise sind die Fräselemente so ausgeführt, dass sie einen Wurf der Späne nach oben direkt nach dem Schnitt der Späne begünstigen. Hierzu sind sie vorteilhafterweise gekrümmt ausgeführt, so dass eine Tangentialbewegung der Späne nach oben umgeleitet wird.

Um einen Transport der Späne nach radial außen aus dem Wirkbereich der Fräsarme zu verbessern, umfassen die Fräsarme vorteilhafterweise jeweils eine Leitplatte zum Abtransport von Frässpänen nach radial außen. Die Leitplatte ist zweckmäßigerweise nach radial außen offen, so dass die Späne an den Leitplatten nach radial außen entlang gleiten und diese ungestört nach radial außen verlassen können.

Vorteilhafterweise sind die Leitplatten schräg zur Axialrichtung ausgerichtet. Auf diese Weise wird eine zusätzliche Beschleunigung der auf eine Leitplatte auftreffenden Späne nach oben erreicht, so dass die Späne bei einer Bewegungskomponente nach außen weiter fliegen können. Die Leitplatten sind zweckmäßigerweise nach oben offen, so dass sie den Abtransport nach oben begünstigen.

Eine hohe Stabilität eines Fräsarms kann erreicht werden, wenn dessen Leitplatte oben auf ein in Rotationsrichtung ausgerichtete Platte des Fräsarms montiert ist. Die Platte verstärkt den Fräsarm in Tangentialrichtung und kann als Montagplattform für die Leitplatten dienen.

Eine gute Fräsleistung des Fräskopfs kann erreicht werden, wenn die Fräsarme jeweils mehrere Fräselemente aufweisen und Fräselemente eines Fräsarms auf anderen Radien angeordnet sind als Fräselemente eines anderen Arms. Ein Eingraben der Fräselemente in einen Fräsgraben eines vorweg laufenden Fräselements kann verhindert werden, so dass jedes der Fräselemente einen eigenen Fräsgraben erzeugt.

Vorteilhafterweise sind die jeweils äußersten Fräselemente aller Fräsarme auf gleichem Radius angeordnet. Es kann einer Unwucht des Fräsarms bei der Arbeit entgegengewirkt werden, die durch ungleich große Kräfte auf die äußersten Fräselemente bei ungleichen Radien entstehen kann.

Die Laufruhe der Fräseinheit kann erhöht werden, wenn sie einen in Fräsrichtung gerichteten Zentrierdorn aufweist. Dieser ist in Fräsrichtung zumindest mit seiner Spitze weiter vorn angeordnet als die Fräselemente und hält die Fräseinheit radial still an ihrem Platz.

Ist der Zentrierdorn mit einem Außengewinde versehen, so kann er sich in den Baumstumpf einschrauben und dort mit einem festen Halt verankert sein, so dass eine hohe Laufruhe erreicht wird. Das Außengewinde kann viergängig sein, so wie es auch vorteilhaft für das Antriebsmittel ist, da mit einer solchen Gewindegestaltung des Antriebsmittels ein leichtes Lösen des entsprechenden Innengewindes vom Außengewinde des Antriebsmittels vereint werden kann mit einer dennoch zuverlässig zusammen haltenden Gewindeverbindung des Innengewindes mit dem Antriebsmittel. Besonders vorteilhaft ist jedoch das Außengewinde des Zentrierdorns eingängig, wodurch ein nicht zu hoher Vorschub mit einer ausgeprägten Gewindetiefe und - höhe und damit einer hohen Stabilität und Haltbarkeit des Außengewindes des Zentrierdorns erreicht werden kann.

In weiter vorteilhafter Ausführungsform ist das Außengewinde so stark ausgeprägt, dass es Fräsgegenkräfte entgegen der Fräsrichtung halten kann. Der Zentrierdorn kann so einen Vorschub vorgeben, indem er sich in den Baumstumpf einschraubt und den Fräskopf zum Baumstumpf hin zieht. Zweckmäßigerweise beträgt die Steigung des Außengewindes zwischen 5 mm und 15 mm, so dass ein Fräsvorschub in der entsprechenden Größe der Steigung pro Umdrehung erreicht wird, der besonders vorteilhaft zum Eingraben in mitteleuropäisches frisches Stirnholz ist. Die Steigung ist zweckmäßigerweise über das ganze Gewinde gleich.

Ist der Zentrierdorn in seinem das Außengewinde tragenden Abschnitt konisch, so kann ein besonders guter Halt des Zentrierdorns im Holz erreicht werden.

In die Öffnung des Verbinders ist ein Spaltkegel eines Holzspalters eingeschraubt. Es kann so ein Holzspalter als Antriebsmittel verwendet werden, wodurch eine Multifunktionalität der Vorrichtung erreicht wird.

Besonders vorteilhaft ist der Holzspalter hydraulisch angetrieben, wodurch eine hohe Kraft bei gleichzeitiger guter Laufruhe erreicht wird. Hierzu umfasst der Fräskopf zweckmäßigerweise einen Hydraulikmotor zum rotatorischen Antrieb des Spaltkegels.

Weitere Vorteile ergeben sich aus der folgenden zeichnungsbeschreibung. In der Zeichnung ist ein Ausführungsbeispiel der Erfindung dargestellt. Die Zeichnung und die obige Beschreibung enthalten zahlreiche Merkmale in Kombination, die der Fachmann zweckmäßigerweise auch einzeln betrachten und zu sinnvollen weiteren Kombinationen zusammenfassen wird.

Es zeigen:
- FIG: 1 einen Fräskopf zum Fräsen von Baumstümpfen mit einer Fräseinheit, die mit einem Verbinder an einem Spaltkegel eines Holzspalters befestigt ist,
- FIG 2: den Verbinder aus FIG 1 in einer Schnittdarstellung,
- FIG 3: die Fräseinheit in einer perspektivischen Ansicht und
- FIG 4: eine Draufsicht auf die Fräseinheit.

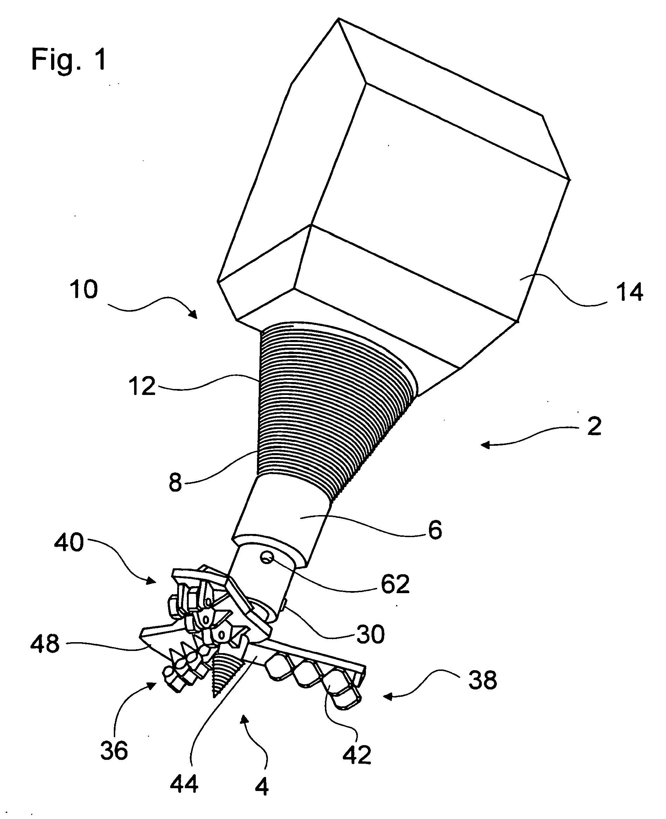

FIG 1 zeigt einen Fräskopf 2 zum Fräsen von Baumstümpfen mit einer Fräseinheit 4, die mit einem Verbinder 6 an einem Spaltkegel 8 eines als Antriebsmittel 10 dienenden Holzspalters befestigt ist. Der Spaltkegel 8 ist mit einem Außengewinde 12 versehen, das ein mehrgängiges Sägezahngewinde ist. Zum Antrieb des Spaltkegels 8 ist dieser mit einem Hydraulikmotor 14 verbunden, der den Spaltkegel 8 rotatorisch antreibt. Der Hydraulikmotor 14 ist wiederum an einem nicht dargestellten Tragarm eines Fahrzeugs befestigt, z.B. eines Traktors oder einer Forstmaschine, mit dem der Holzspalter angehoben und bewegt werden kann.

Zum Betrieb des Holzspalters wird dieser mit der in FIG 1 nicht sichtbaren Spitze des Spaltkegels 8 auf ein liegendes Stück Holz gesetzt, z.B. auf einen Teil eines Baumstamms, und in Drehung um die Längsachse des Spaltkegels 8 versetzt. Das Außengewinde 12 schraubt sich in das Holz ein und der Spaltkegel 8 presst das Schraubloch auseinander, so dass das Holz gespalten wird.

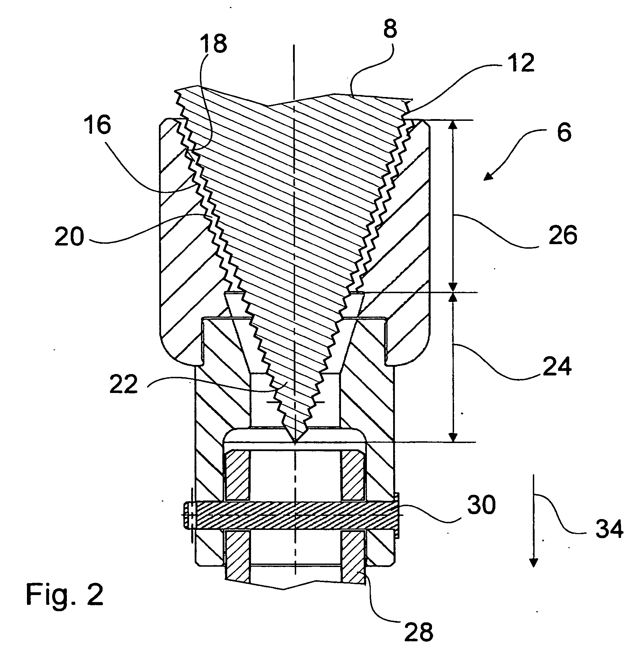

Soll ein Baumstumpf beseitigt werden, so kann die Fräseinheit 4 mit dem Verbinder 6 am Spaltkegel 8 befestigt und somit drehend angetrieben werden. Zur Befestigung des Verbinders 6 am Spaltkegel 8 ist der Verbinder 6 mit einem Innengewinde 16 versehen, das in FIG 2 dargestellt ist.

FIG 2 zeigt den Verbinder 6 mit einem Teil des fast ganz eingeführten Spaltkegels 8 in einer Schnittdarstellung. Eine Innenwand 18 einer von der Fräseinheit 4 abgewandten Öffnung 20 ist mit dem Innengewinde 16 versehen, das ein Gegenstück zu dem Außengewinde 12 des Spaltkegels 8 ist. Zur Verdeutlichung ist der Spaltkegel 8 nicht ganz in die Öffnung 20 eingeführt, sondern nur fast so weit, bis er durch ein Verdrehen gegenüber dem Verbinder 6 in diesen eingeschraubt werden kann.

Ein Kegelspitzenbereich 22 des Spaltkegels 8 ragt hierbei durch das Innengewinde 16 hindurch und bleibt auch in eingeschraubtem Zustand des Spaltkegels 8 vom Innengewinde 16 unberührt. Die axiale Länge 24 dieses unberührten Kegelspitzenbereichs 22 ist etwa 80% der axialen Länge 26 des Innengewindes 16. Ist das stark beanspruchte viergängige Außengewinde 12 im Bereich der Kegelspitze 22 beschädigt, so stört das ein Einschrauben oder Lösen des Spaltkegels 8 vom Verbinder 6 nicht.

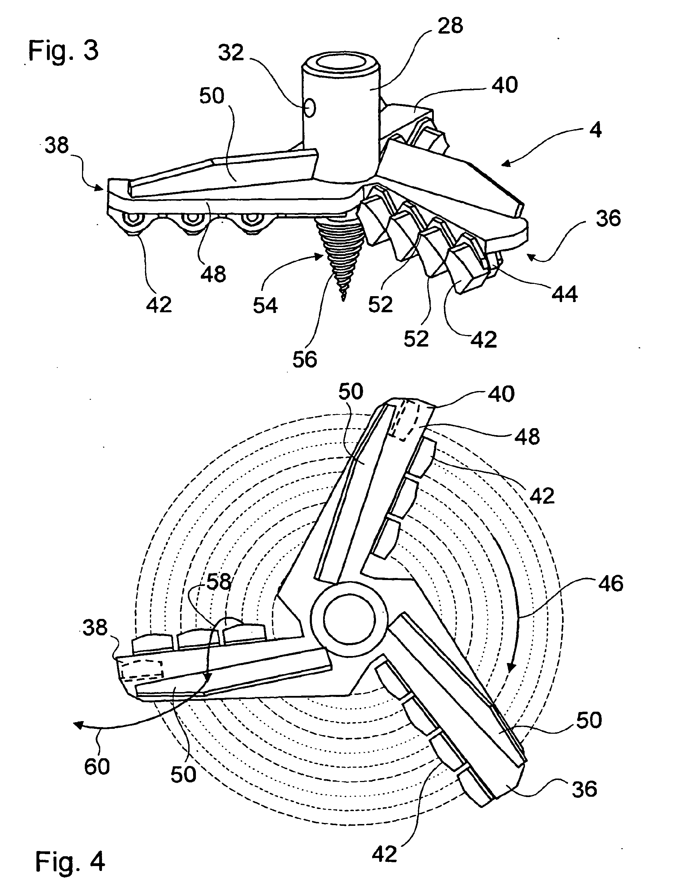

Der Verbinder 6 ist seinerseits mit einer Hülse 28 (siehe auch FIG 3) der Fräseinheit 4 durch einen Bolzen 30 verbunden, der in eine Ausnehmung 32 der Hülse 28 eingeführt ist. Die Hülse 28 ist mit dem übrigen Teil der Fräseinheit 4 verschweißt. Um eine kompakte Bauweise des Verbinders 6 zu erreichen, ist die Öffnung 20 in Fräsrichtung 34, die identisch ist mit der Axialrichtung des Spaltkegels 8 und dem Verbinder 6, vollständig durch den Verbinder 6 geführt. Der Kegelspitzenbereich 22 kann hierdurch im eingeschraubten Zustand des Spaltkegels 8 im Verbinder sehr weit in die Öffnung 20 und bis in die Hülse 28 hinein reichen.

Die Fräseinheit 4 ist in FIG 1 schräg von unten, in FIG 3 schräg von oben und in FIG 4 in einer Draufsicht dargestellt. Sie weist drei jeweils in Radialrichtung ausgerichtete Fräsarme 36, 38, 40 auf, an denen je vier Fräselemente 42 in Radialrichtung nebeneinander befestigt sind. Die Fräselemente 42 sind an Trägern 44 befestigt, die unter eine in Rotationsrichtung 46 ausgerichtete Platte 48 geschweißt sind. Oben auf der Platte 48 tragen die Fräsarme 36, 38, 40 jeweils Leitplatten 50 zur Spanabfuhr, die gegen die Axialrichtung verkippt und gegen die Radialrichtung leicht schräg ausgerichtet sind.

Die Fräselemente 42 sind mit jeweils zwei Schneiden 52 versehen, so dass die obere Schneide 52, wenn die untere Schneide 52 abgenutzt ist, durch eine Drehung des Fräselements 42 um eine in Tangentialrichtung 46 ausgerichtete Achse nach unten gekehrt werden kann, so dass dann eine neue, scharfe Schneide 52 zur Verfügung steht. Außerdem sind die Fräselemente 42 leicht eingekehlt, so dass ein von ihnen abgehobener Span durch die Kehle nach oben gebogen und nach oben gelenkt wird.

Die drei inneren der jeweils vier Fräselemente 42 der Fräsarme 36, 38 40 sind auf jeweils anderen Radien angeordnet als die anderen Fräselemente 42 der beiden anderen Fräsarme 36, 38, 40. So ist das innerste Fräselement 42 des Fräsarms 36 auf dem innersten bzw. kleinsten Radius angeordnet, der in FIG 4 lang gestrichelt dargestellt ist. Das innerste Fräselement 42 des Fräsarms 40 ist auf dem zweitinnersten Radius angeordnet, der in FIG 4 kurz gestrichelt dargestellt ist. Das innerste Fräselement 42 des Fräsarms 38 auf dem drittinnersten Radius angeordnet, der in FIG 4 mittellang gestrichelt dargestellt ist. Auf dem viertinnersten Radius ist nun das zweitinnerste Fräselement 42 des Fräsarms 36 angeordnet, usw.

Auf diese Weise sind die drei innersten der jeweils vier Fräselemente 42 der Fräsarme 36, 38 40 von Fräsarm 36, 38, 40 zu Fräsarm 36, 38, 40 jeweils um 1/3 eines radialen Abstands zwischen den Fräselementen 42 eines Fräsarms 36, 38, 40 radial voneinander beabstandet. Die äußersten Fräselemente 42 der Fräsarme 36, 38, 40 liegen jedoch auf dem gleichen äußersten Radius, wozu die äußersten Fräselemente 42 der Fräsarme 38 und 40 jeweils ein Stück weit tangential nach hinten versetzt sind.

Am unteren Ende der Fräseinheit 4 ist diese mit einem kegelförmigen Zentrierdorn 54 versehen, der ein Außengewinde 56 mit einer Gewindesteigung von beispielsweise 8 mm trägt. Auch größere Steigungen sind denkbar, je nach Verhältnis zur Größe des Zentrierdorns 54 zum größten Fräsradius und damit den Fräskräften.

Zum Betrieb des Fräskopfs 2 wird der Zentrierdorn 54 mit leichtem Druck auf einen Baumstumpf aufgesetzt und die Fräseinheit 4 wird vom Antriebsmittel 10 rotatorisch angetrieben. Hierdurch schraubt sich der Zentrierdorn 54 in das Holz des Baumstumpfs ein und zieht den Fräskopf 2 nach unten an den Baumstumpf. Erreichen die Fräselemente 42 den Baumstumpf, so graben sie sich in dessen Holz ein und tragen es spanend ab. Der Vorschub des Fräskopfs 2 wird hierbei vom Zentrierdorn 54 gleichmäßig eingestellt, der sich in diesem Beispiel mit 8 mm pro Umdrehung in den Baumstumpf einschraubt und den Fräskopf 2 mit dem gleichen Vorschub zum Baumstumpf zieht.

Die beim Abfräsen entstehenden Späne werden durch die leichte Kehlung der Fräselemente 42 etwas nach oben geworfen. Durch den freien Raum zwischen den Fräsarmen 36, 38, 40, der als Spanauswurfausnehmung dient, können die Späne die Fräselemente 42 nach oben verlassen und fliegen durch die Drehung der Fräseinheit 4 etwas nach radial außen, wie durch einen Pfeil 58 dargestellt ist. Sofern sie den Arbeitsbereich der Fräseinheit 2 nicht bereits durch diesen Schwung verlassen, treffen sie auf die nächstfolgende Leitplatte 50 auf, auf der sie je nach Schwung - nach radial außen entlang gleiten oder nach oben und radial außen abprallen und so aus dem Arbeitsbereich geworfen werden, wie durch einen Pfeil 60 dargestellt ist. Auf diese Weise wird der Arbeitsbereich weitgehend spanfrei gehalten und ein Bediener des Fräskopfs 2 kann die Arbeit der Fräseinheit 4 überwachen.

Zum Lösen der Fräseinheit 4 vom Antriebsmittel 10 wird der Verbinder 6 vom Spaltkegel 8 abgeschraubt. Hierfür kann ein Löseeisen in eine Ausnehmung 62 (FIG 1) des Verbinders 6 eingesteckt und dieser mit dem Hebel des Löseeisens abgeschraubt werden. Es sind zwei gegenüberliegende Ausnehmungen 62 vorhanden, die um 90° versetzt zu den Ausnehmungen 32 für den Bolzen 30 angeordnet sind. Der feste Halt des Verbinders 6 auf dem Spaltkegel 8 kann hierbei mit einem Ruck gelöst werden, da bereits mit einer kleinen Lösedrehung der Spaltkegel 8 nach innen vom Innengewinde 16 abgelöst wird, so dass kein langer Lauf des Außengewindes 12 entlang des Innengewindes 16 entsteht, der die Gewinde 12, 16 stark beanspruchen könnte.

### Bezugszeichenliste

- 2: Fräskopf
- 4: Fräseinheit
- 6: Verbinder
- 8: Spaltkegel
- 10: Antriebsmittel
- 12: Außengewinde
- 14: Hydraulikmotor
- 16: Innengewinde
- 18: Innenwand
- 20: Öffnung
- 22: Kegelspitzenbereich
- 24: Länge
- 26: Länge
- 28: Hülse
- 30: Bolzen
- 32: Ausnehmung
- 34: Fräsrichtung
- 36: Fräsarm
- 38: Fräsarm
- 40: Fräsarm
- 42: Fräselement
- 44: Träger
- 46: Rotationsrichtung
- 48: Platte
- 50: Leitplatte
- 52: Schneide
- 54: Zentrierdorn
- 56: Außengewinde
- 58: Pfeil
- 60: Pfeil
- 62: Ausnehmung

## Patentansprüche

1. Fräskopf (2) zum Fräsen von Baumstümpfen mit einer Fräseinheit (4) und einem daran befestigten Verbinder (6) mit einer von der Fräseinheit (4) abgewandten Öffnung (20), deren Innenwand (18) mit einem Innengewinde (16) zum Aufschrauben auf ein maschinelles Antriebsmittel (10) zum Antrieb der Fräseinheit (4) versehen ist,
**dadurch gekennzeichnet, dass** die Innenwand (18) zumindest im Gewinde tragenden Abschnitt konisch ist und dass in die Öffnung (20) ein Spaltkegel (8) eines Holzspalters eingeschraubt ist.

2. Fräskopf (2) nach Anspruch 1,
**dadurch gekennzeichnet, dass** das Innengewinde (16) mehrgängig ist.

3. Fräskopf (2) nach Anspruch 1 oder 2,
**dadurch gekennzeichnet, dass** die Öffnung (20) durchgängig in einer Fräsrichtung (34) durch den Verbinder (6) reicht.

4. Fräskopf (2) nach einem der vorhergehenden Ansprüche,
**dadurch gekennzeichnet, dass** das Innengewinde (16) einen Kegelspitzenbereich (22) eines in das Innengewinde (16) eingeschraubten Außengewindekegels freilässt, wobei eine axiale Länge des Kegelspitzenbereichs (22) mindestens 50% der axialen Länge des Innengewindes (16) beträgt.

5. Fräskopf (2) nach einem der vorhergehenden Ansprüche,
**dadurch gekennzeichnet, dass** die Fräseinheit (4) mehrere radial ausgerichtete Fräsarme (36, 38, 40) mit in Axialrichtung freien Spanauswurfausnehmungen zwischen ihnen aufweist.

6. Fräskopf (2) nach Anspruch 5,
**dadurch gekennzeichnet, dass** die Fräsarme (36, 38, 40) jeweils eine Leitplatte (50) zum Abtransport von Frässpänen nach radial außen aufweisen.

7. Fräskopf (2) nach einem der vorhergehenden Ansprüche,
**dadurch gekennzeichnet, dass** die Fräsarme (36, 38, 40) jeweils mehrere Fräselemente (42) aufweisen und Fräselemente (42) eines Fräsarms (36, 38, 40) auf anderen Radien angeordnet sind als Fräselemente (42) eines anderen Fräsarms (36, 38, 40).

8. Fräskopf (2) nach einem der vorhergehenden Ansprüche,
**dadurch gekennzeichnet, dass** die Fräseinheit (4) einen in Fräsrichtung (34) gerichteten Zentrierdorn (54) aufweist.

9. Fräskopf (2) nach Anspruch 8,
**dadurch gekennzeichnet, dass** der Zentrierdorn (64) mit einem Außengewinde (56) versehen ist.

## Claims

1. Milling head (2) for milling tree stumps with a milling unit (4) and a connector (6) attached thereto with an opening (20), turned away from the milling unit (4), the inner wall (18) of which is provided with an inner thread (16) for screwing onto a mechanical driving means (10) for driving the milling unit (4),
**characterized in that** the inner wall (18) is conical at least in the thread bearing portion and that a splitting cone (8) of a timber splitter is screwed into the opening (20).

2. Milling head (2) according to claim 1,
**characterized in that** the inner thread (16) is a multiple thread.

3. Milling head (2) according to claim 1 or 2,
**characterized in that** the opening (20) reaches end to end in a milling direction (34) through the connector (6).

4. Milling head (2) according to one of the preceding claims,
**characterized in that** the inner thread (16) sets free a cone tip portion (22) of an outer thread cone screwed into the inner thread (16), whereby an axial length of the cone tip portion (22) is at least 50% of the axial length of the inner thread (16).

5. Milling head (2) according to one of the preceding claims,
**characterized in that** the milling unit (4) has several radially orientated milling arms (36, 38, 40) with chip ejection recesses between them which are free in axial direction.

6. Milling head (2) according to claim 5,
**characterized in that** the milling arms (36, 38, 40) have respectively one guiding plate (50) for the removal of milling chips radially to the outside.

7. Milling head (2) according to one of the preceding claims,
**characterized in that** the milling arms (36, 38, 40) have respectively several milling elements (42) and milling elements (42) of a milling arm (36, 38, 40) are placed on other radii than milling elements (42) of another milling arm (36, 38, 40).

8. Milling head (2) according to one of the preceding claims,
**characterized in that** the milling unit (4) has a centering pin (54) pointed in milling direction (34).

9. Milling head (2) according to claim 8,
**characterized in that** the centering pin (64) is provided with an outer thread (56).

## Revendications

1. Tête de fraisage (2) pour fraiser des souches d'arbre avec une unité de fraisage (4) et un raccord (6) qui y est fixé avec une ouverture (20), opposée à l'unité de fraisage (4), dont la paroi intérieure (18) est pourvue d'un filet intérieur (16) à visser sur un moyen d'entraînement mécanique (10) pour l'entraînement de l'unité de fraisage (4),
**caractérisée en ce que** la paroi intérieure (18) est conique au moins dans la section qui porte le filet et qu'un cône fendeur (8) d'une fendeuse à bois est vissé dans l'ouverture (20).

2. Tête de fraisage (2) selon la revendication 1,
**caractérisée en ce que** le filet intérieur (16) est à filetage multiple.

3. Tête de fraisage (2) selon la revendication 1 ou 2,
**caractérisée en ce que** l'ouverture (20) traverse le raccord (6) de bout en bout dans un sens de fraisage (34).

4. Tête de fraisage (2) selon l'une des revendications précédentes,
**caractérisée en ce que** le filet intérieur (16) dégage une zone de pointe de cône (22) d'un cône à filet extérieur qui est vissé dans le filet intérieur (16), une longueur axiale de la zone de pointe du cône (22) comportant au moins 50 % de la longueur axiale du filet intérieur (16).

5. Tête de fraisage (2) selon l'une des revendications précédentes,
**caractérisée en ce que** l'unité de fraisage (4) présente plusieurs bras de fraisage (36, 38, 40) orientés dans le sens radial avec des évidements d'enlèvement des copeaux entre eux qui sont libres dans le sens axial.

6. Tête de fraisage (2) selon la revendication 5,
**caractérisée en ce que** les bras de fraisage (36, 38, 40) présentent respectivement une plaque de guidage (50) pour l'évacuation des copeaux de fraisage radialement vers l'extérieur.

7. Tête de fraisage (2) selon l'une des revendications précédentes,
**caractérisée en ce que** les bras de fraisage (36, 38, 40) présentent respectivement plusieurs éléments de fraisage (42) et que des éléments de fraisage (42) d'un bras de fraisage (36, 38, 40) sont placés sur d'autres rayons que des éléments de fraisage (42) d'un autre bras de fraisage (36, 38, 40).

8. Tête de fraisage (2) selon l'une des revendications précédentes,
**caractérisée en ce que** l'unité de fraisage (4) présente un mandrin de centrage (54) orienté dans le sens de fraisage (34).

9. Tête de fraisage (2) selon la revendication 8,
**caractérisée en ce que** le mandrin de centrage (64) est pourvu d'un filet extérieur (56).
